# DEMANDE DE BREVET EUROPEEN

(11) **EP 2 237 193 A1**
(43) Date de publication de la demande: **06.10.2010**
(21) Numéro de dépôt: 10159052.9
(22) Date de dépôt: 02.04.2010
(51) Int. Cl.: G06K 19/077

(54) **Carte d'identification de radio fréquence (RFID) semi-rigide, le procédé de fabrication et la machine permettant sa fabrication**

(30) Priorité: 03.04.2009 FR 0901618
(71) Demandeur: Paragon Identification, 18410 Argent sur Sauldre (FR)
(72) Inventeur: Bouchard, Olivier, 41200 Romorantin (FR)
(74) Mandataire: Debay, Yves

(57) **Abrégé**

L'invention consiste en une carte RFID (0) composée d'au moins une couche supérieure (1), une couche inférieure (2), une couche fonctionnelle (3) comprenant au moins un composant électronique (301), une antenne (302) connectée au composant électronique (301), **caractérisée en ce que** la carte (0) comprend, en outre, un compensateur (4) entre la couche fonctionnelle (3) et la couche inférieure (2), le compensateur (4) étant évidé à l'emplacement du composant électronique (301) et d'épaisseur sensiblement égale à l'épaisseur du composant électronique (301) sur la couche fonctionnelle (3) et en ce que les couches sont assemblées entre elles par collage. L'invention comporte également le procédé de fabrication en continu de la carte RFID (0) et la machine selon le procédé de fabrication de la carte RFID.

## Description

La présente invention concerne le domaine de l'identification par radio-fréquence (RFID) et plus particulièrement les cartes RFID.

La présente invention propose une carte RFID semi-rigide, son procédé de fabrication et la machine permettant de fabriquer la carte RFID.

L'identification par radio-fréquence est de plus en plus répandue pour être utilisée dans de nombreux domaines. Ce type d'identification est généralement basé sur un système constitué d'un composant électronique et d'une antenne, associés à un support. Ce support peut avoir plusieurs formes. Il peut être, par exemple, sous forme d'étiquette collée sur un produit utilisé dans le commerce pour identifier ce produit. Il peut être également sous forme de carte RFID, appelée aussi carte à puce sans contact permettant, par exemple, l'identification de personnes autorisant ainsi l'entrée d'un immeuble ou la délivrance de services pour lesquels la personne identifiée est abonnée. Ces services peuvent être, par exemple, l'accès aux transports en commun ou d'un service de location de vélos d'une communauté urbaine ou des forfaits d'accès aux remonte-pentes de stations de ski.

Les cartes RFID actuellement utilisées sont constituées de plusieurs couches superposées. Le composant électronique et l'antenne sont situés dans une couche fonctionnelle autrement appelée prélame qui est la couche intermédiaire entre plusieurs couches en plastique. Le procédé de fabrication de ces cartes démarre par la superposition de planches. Une planche intermédiaire constituant le prélame, comportant une pluralité de composants électroniques associée à une antenne, est prise en sandwich entre plusieurs planches en plastique. Toutes ces couches sont alors maintenues entre elles par thermoformage. Enfin, une découpe des couches thermoformées permet la création des cartes RFID.

Ce procédé de fabrication permet d'obtenir des cartes RFID durables dans le temps mais trop coûteuses. Dans certains domaines d'utilisation où la carte RFID est utilisée pour un temps limité avant d'être finalement détruite, par exemple, les cartes RFID pour les forfaits de ski où l'abonné aux services de remonte-pentes d'une station de ski n'utilise la carte que pendant la période de son séjour. Il est souhaitable de proposer une solution économique et fiable. De plus, le ticket semi-rigide peut être biodégradable.

La présente invention a pour but de donner une solution technique en proposant une carte RFID semi-rigide, son procédé de fabrication et une machine selon le procédé de fabrication de la carte RFID semi-rigide.

Pour atteindre ce but, la carte RFID semi-rigide est composée d'au moins :
- une couche fonctionnelle comprenant au moins :
   o un composant électronique,
   o une antenne connectée au composant électronique ;
- une couche supérieure ;
- une couche inférieure ;
   **caractérisée en ce que** la carte comprend, en outre, un compensateur entre la couche fonctionnelle et la couche supérieure ou la couche inférieure, le compensateur étant évidé à l'emplacement du composant électronique et d'épaisseur sensiblement égale à l'épaisseur du composant électronique sur la couche fonctionnelle
   et en ce que les couches sont assemblées entre elles par collage.

Selon une autre particularité, la couche supérieure est en matière synthétique souple.

Selon une autre particularité, la couche supérieure est en papier.

Selon une autre particularité, la couche supérieure est apte à être imprimée avant l'assemblage par collage.

Selon une autre particularité, la couche supérieure comporte une surface apte à être imprimée à l'aide d'une imprimante à jet d'encre, une imprimante laser, une imprimante thermique, par transfert thermique, par sublimation ou par impression thermique réinscriptible.

Selon une autre particularité, la couche inférieure est en matière synthétique souple.

Selon une autre particularité, la couche inférieure est en papier.

Selon une autre particularité, la couche inférieure est apte à être imprimée avant l'assemblage par collage.

Selon une autre particularité, la couche inférieure comporte une surface apte à être imprimée à l'aide d'une imprimante à jet d'encre, une imprimante laser, une imprimante thermique, par transfert thermique, par sublimation ou par impression thermique réinscriptible..

Selon une autre particularité, la couche fonctionnelle est en matière synthétique souple sur laquelle est gravée ou imprimée l'antenne connectée au composant électronique.

Selon une autre particularité, la couche fonctionnelle est en papier sur lequel est gravée ou imprimée l'antenne connectée au composant électronique.

Selon une autre particularité, le compensateur est en matière synthétique souple.

Selon une autre particularité, le compensateur est en papier.

Selon une autre particularité, la couche supérieure, la couche inférieure, la couche fonctionnelle et le compensateur sont en matière biodégradable.

Un autre but est atteint en proposant un procédé de fabrication de la carte RFID **caractérisé en ce que** la couche supérieure, la couche inférieure et le compensateur sont alimentés en continu par des bobines fournissant des bandes de largeur au moins égale à une des dimensions de la carte RFID, en ce que la couche fonctionnelle est alimentée en continu par au moins une bobine fournissant au moins une bande en parallèle et en ce qu'il comporte au moins les étapes suivantes :
- une étape d'impression en continu de la surface extérieure de la bande de la couche inférieure ou supérieure ;
- une étape d'évidement en continu de la bande du compensateur ;
- une étape de collage en continu de la ou des bandes du compensateur sur la face intérieure de la bande de la couche inférieure ou de la bande de la couche supérieure ;
- une étape de mise en place en continu des composants électroniques en coïncidence avec les évidements de la bande du compensateur ;
- une étape de collage en continu de la ou des bandes de couches fonctionnelles sur la face intérieure de la bande de la couche supérieure ou de la bande de la couche inférieure ;
- une étape de découpage en continu.
- une étape de personnalisation en ligne.

Selon une autre particularité, l'étape d'impression en continu de la surface extérieure de la bande de la couche inférieure est suivie d'une étape d'impression en continu de la surface extérieure de la bande de la couche supérieure.

Selon une autre particularité, l'étape d'impression en continu de la surface extérieure de la bande de la couche inférieure est précédée d'une étape d'impression en continu de la surface extérieure de la bande de la couche supérieure.

Selon une autre particularité, l'étape d'évidemment de la bande du compensateur est réalisée en continu par un système de trouage.

Selon une autre particularité, les évidements de la bande du compensateur ont une forme et des dimensions aptes au logement de chaque composant électronique dans un évidement.

Selon une autre particularité, l'étape de collage en continu de la ou des bandes du compensateur sur la face intérieure de la bande de la couche inférieure ou de la couche supérieure est suivie d'une étape de mise en pression en continu de la bande du compensateur et de la bande de la couche inférieure ou de la couche supérieure.

Selon une autre particularité, l'étape de collage en continu de la ou des bandes de couches fonctionnelles sur la face intérieure de la bande de la couche supérieure ou de la bande de la couche inférieure est suivie d'une étape de mise en pression en continu de la bande de la couche inférieure, de la bande du compensateur, des bandes de couches fonctionnelles et de la bande de la couche supérieure.

Selon une autre particularité, l'étape d'impression en continu de la surface extérieure de la bande de la couche inférieure est suivie d'une étape de stabilisation en tension en continu de la bande de la couche inférieure.

Selon une autre particularité, l'étape de mise en pression en continu de la bande du compensateur et de la bande de la couche inférieure ou de la couche supérieure est suivie d'une étape de stabilisation en tension en continu de la bande de la couche supérieure ou de la bande de la couche inférieure.

Selon une autre particularité, l'étape de découpage en continu consiste en une découpe longitudinale des bandes assemblées puis un enroulement sous forme de bobineaux.

Selon une autre particularité, l'étape de découpage en continu consiste en une découpe longitudinale et transversale des bandes assemblées puis un pliage sous forme de paravents.

Selon une autre particularité, l'étape de découpage en continu consiste en une découpe des bandes assemblées en cartes RFID individuelles.

Selon une autre particularité, l'étape de découpage en continu des cartes RFID est suivie d'une étape de contrôle en ligne à l'aide d'une antenne de lecture.

Selon une autre particularité, l'étape de contrôle en ligne est suivie d'une étape de personnalisation en continu.

Selon une autre particularité, l'étape de personnalisation est suivie d'une étape de conditionnement.

Un autre but est atteint en proposant une machine de production selon le procédé de fabrication de la carte RFID comportant en ligne une succession de postes dont au moins :
- un poste d'alimentation par bobine de la couche inférieure,
- un poste d'alimentation par bobine de la couche supérieure,
- si besoin, au moins un poste d'impression sur la face extérieure de la couche supérieure ou de la couche inférieure.

Selon une autre particularité, la machine comporte en outre :
- un poste d'alimentation par bobine du compensateur,
- un poste d'évidement du compensateur.

Selon une autre particularité, la machine comporte en outre :
- un poste comportant au moins un module d'alimentation par bobine de bande de couches fonctionnelles.

D'autres particularités et avantages de la présente invention apparaîtront plus clairement à la lecture de la description ci-après, faite en référence aux dessins annexés, dans lesquels :
- la figure 1 représente une coupe transversale de la carte RFID ;
- la figure 2 représente une vue de dessus de la couche fonctionnelle comportant le composant électronique et son antenne ;
- la figure 3 illustre le procédé de fabrication de la carte RFID.
- la figure 4 illustre la machine selon le procédé de fabrication de la carte RFID.

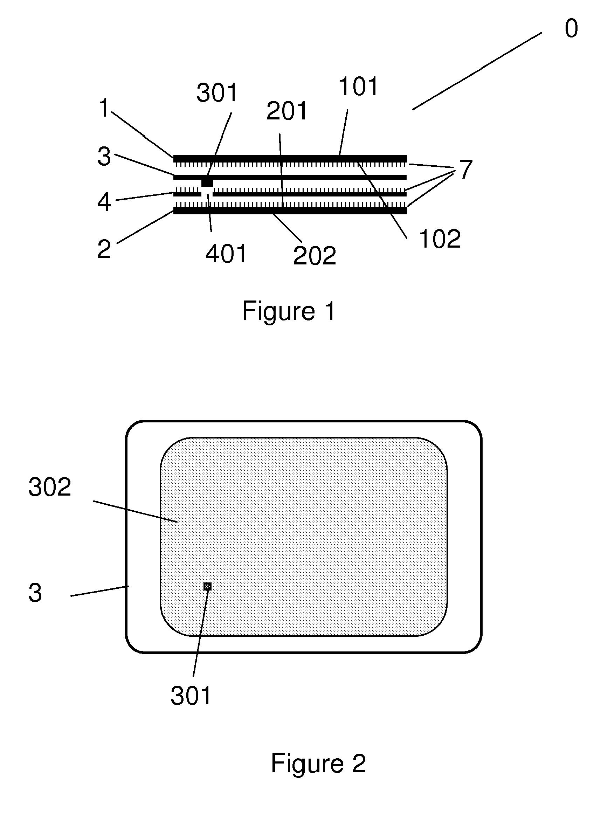

En référence aux figures 1 et 2, l'invention concerne une carte RFID (0) composée d'au moins :
- une couche fonctionnelle (3) en matière souple comprenant au moins :
   o un composant électronique (301),
   o une antenne (302) connectée au composant électronique (301) ;
- une couche supérieure (1) en matière souple ;
- une couche inférieure (2) en matière souple ;
- un compensateur (4) en matière souple.

La couche supérieure (1) est, par exemple, un support ayant une épaisseur variant, par exemple, de 50 µm à 400 µm.

La matière de la couche supérieure (1) est, par exemple, du papier ou une matière synthétique souple telle que le polypropylène, le PVC (chlorure de polyvinyle) ou le PET (polyéthylène téréphtalate ou polyester).

Le compensateur (4) est un support ayant une épaisseur inférieure, par exemple, à 400 pm, la valeur de l'épaisseur pouvant varier entre, par exemple, 50 µm et 400 µm. Le compensateur a une largeur et une longueur inférieures ou égales à la largeur et la longueur de la carte RFID (0).

La matière du compensateur (4) est, par exemple, du papier ou une matière synthétique souple telle que le polypropylène, le PVC (chlorure de polyvinyle) ou le PET (polyéthylène téréphtalate ou polyester)

La couche fonctionnelle (3) est un support sur lequel est gravée ou imprimée une antenne (302), par exemple, en aluminium, connectée à un composant électronique (301) avec un circuit intégré. Selon le produit et le type de protocole, le design de l'antenne (302) et le type du composant électronique (301) sont variables.

La matière de la couche fonctionnelle (3) est, par exemple, du papier ou une matière synthétique souple telle que le polypropylène, le PVC (chlorure de polyvinyle) ou le PET (polyéthylène téréphtalate ou polyester)

La couche inférieure (2) est, par exemple, un support ayant une épaisseur variant, par exemple, de 50 µm à 400 µm.

La matière de la couche inférieure (2) est, par exemple, du papier ou une matière synthétique souple telle que le polypropylène, le PVC (chlorure de polyvinyle) ou le PET (polyéthylène téréphtalate ou polyester)

Avantageusement, la couche inférieure (2), la couche supérieure (1), le compensateur (4) et la couche fonctionnelle (3) sont collés entre eux par une colle (7), par exemple, thermofusible ou à base aqueuse ou à base solvant ou toute autre colle apte à maintenir efficacement et durablement ensemble les couches de la carte RFID (0).

La couche fonctionnelle (3) est prise en sandwich entre la couche supérieure (1) et la couche inférieure (2).

Afin de compenser l'épaisseur du composant électronique (301) intégré sur la couche fonctionnelle (3), une couche compensatrice ou autrement appelé un compensateur (4) est situé entre la couche fonctionnelle (3) et la couche inférieure (2). Le compensateur (4) subit un évidement afin que le composant électronique (301) puisse se loger dans l'évidement (401) du compensateur (4) lorsque la couche fonctionnelle (3) est collée sur le compensateur (4). Le compensateur (4) compense l'épaisseur du composant électronique (301) dépassant de la surface de la couche fonctionnelle (3) et la couche de colle entre la couche fonctionnelle (3) et le compensateur (4) en ayant une épaisseur sensiblement égale à l'épaisseur du composant électronique (301) dépassant de la surface de la couche fonctionnelle ajoutée de l'épaisseur de colle.

Selon une autre configuration, le compensateur (4) est situé entre la couche fonctionnelle (3) et la couche supérieure (1).

Une antenne (302), par exemple en aluminium, intégrée à la couche fonctionnelle (3), est connectée au composant électronique (301). Le composant électronique (301) est placé selon l'utilisation de la carte RFID.

Selon une configuration, la couche supérieure (1) possède une surface thermique apte à être imprimée par une imprimante thermique.

Selon une autre configuration, la couche supérieure (1) possède une surface apte à être imprimée par transfert thermique.

Selon une autre configuration, la couche supérieure (1) possède une surface apte à être imprimée par une imprimante à jet d'encre.

Selon une autre configuration, la couche supérieure (1) possède une surface apte à être imprimée par une imprimante laser.

Selon une autre configuration, la couche supérieure (1) possède une face thermique réinscriptible.

Selon une configuration, la couche supérieure (1) possède une face apte à être imprimée par sublimation.

Selon une configuration, la couche inférieure (2) possède une surface thermique apte à être imprimée par une imprimante thermique.

Selon une autre configuration, la couche inférieure (2) possède une surface apte à être imprimée par transfert thermique.

Selon une autre configuration, la couche inférieure (2) possède une surface apte à être imprimée par une imprimante à jet d'encre.

Selon une autre configuration, la couche inférieure (2) possède une surface apte à être imprimée par une imprimante laser.

Selon une configuration, la couche inférieure (2) possède une face thermique réinscriptible.

Selon une configuration, la couche inférieure (2) possède une face apte à être imprimée par sublimation.

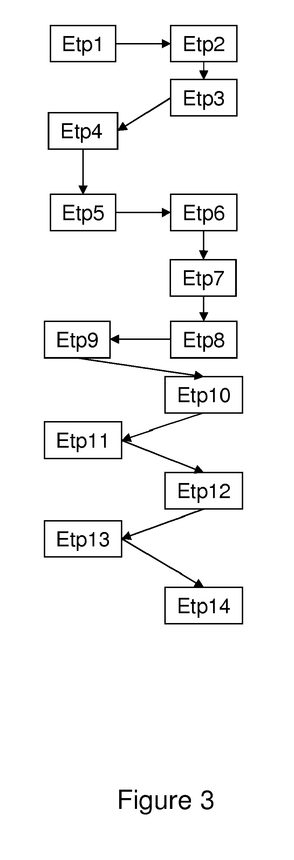

En référence à la figure 3, le procédé de fabrication de la carte RFID (0) comporte plusieurs étapes qui permettent de réaliser l'impression, le complexage et le façonnage de la carte RFID (0) lors d'un seul passage sur une presse (5).

La presse (5) peut être, de façon non-limitative, une presse flexographique.

Avant le passage sur la presse (5), la couche inférieure (2), la couche supérieure (1) et le compensateur (4) sont alimentés en continu par des bobines (203, 103, 403) fournissant des bandes de largeur au moins égales à une des dimensions de la carte RFID (0) permettant une fabrication de cartes RFID (0) en continu.

La couche fonctionnelle (3) est alimentée en continu par au moins une bobine (3031, 3032) fournissant au moins une bande en parallèle permettant ainsi une fabrication en continu de séries d'au moins une carte RFID (0).

Selon une configuration, la largeur des bandes assemblées est au moins égale à la largeur de la carte RFID (0).

Selon une autre configuration, la largeur des bandes est au moins égale à la longueur de la carte RFID (0).

Dans une première étape (Etp1), la bande de la bobine (203) constituant la couche inférieure (2) est déroulée afin de permettre la pré-impression en continu de la surface extérieure (202) des bandes des couches inférieures (2) pour une pluralité de cartes.

Dans une étape suivante (Etp2), la bande de la couche inférieure (2) est stabilisée en tension.

Dans une étape suivante (Etp3), la bande de la bobine (103) constituant le matériau de la couche supérieure (1) est dévidée afin de permettre l'éventuelle impression en continu de la surface extérieure (101) des bandes des couches supérieures (1) pour une pluralité de cartes.

Selon une autre configuration, dans la première étape (Etp1), la bande de la bobine (103) constituant la couche supérieure (1) est déroulée afin de permettre la pré-impression en continu de la surface extérieure (101) des bandes des couches supérieures (1) pour une pluralité de cartes. Dans une étape suivante (Etp2), la bande de la couche supérieure (1) est stabilisée en tension. Dans une étape suivante (Etp3), la bande de la bobine (203) constituant le matériau de la couche inférieure (2) est dévidée afin de permettre l'éventuelle impression en continu de la surface extérieure (202) des bandes des couches inférieures (2) pour une pluralité de cartes.

Dans une étape suivante (Etp4), la bande du compensateur (4) subit en continu une pluralité d'évidements (401). L'évidement (401) est réalisé par un système de trouage, par exemple, par un bloc permettant d'évider par poinçon ou par un système de « shock air » permettant à la fois d'évider et d'expulser la partie évidée.

Dans une étape suivante (Etp5), un collage en continu de la bande du compensateur (4) évidé sur la surface intérieure (102) de la bande de la couche inférieure (1) est effectué en continu.

Selon une autre configuration, dans une étape suivante (Etp5), un collage en continu de la bande du compensateur (4) évidé sur la surface intérieure (201) de la bande de la couche supérieure (2) est effectué en continu.

Dans une étape suivante (Etp6), la bande du compensateur (4) évidé et la bande de la couche supérieure (1) subissent en continu une mise en pression après collage.

Selon une autre configuration, dans une étape suivante (Etp6), la bande du compensateur (4) évidé et la bande de la couche inférieure (2) subissent en continu une mise en pression après collage.

Dans une étape suivante (Etp7), la bande de la couche inférieure (2) est stabilisée en tension.

Selon une autre configuration, dans une étape suivante (Etp7), la bande de la couche supérieure (1) est stabilisée en tension.

Dans une étape (Etp8), les bobines constituées de couches fonctionnelles (3) sont déroulées en continu.

Dans une étape suivante (Etp9), un collage des bandes de couches fonctionnelles (3) sur la bande du compensateur (4) est effectué en continu en faisant coïncider le composant électronique (301) avec l'évidement (401) du compensateur (4).

Dans une étape suivante (Etp10), les bandes de couches fonctionnelles (3) et la bande du compensateur (4) subissent en continu une mise en pression après collage.

Dans une étape suivante (Etp11), un collage des bandes de couches fonctionnelles (3) sur la surface intérieure (201) de la bande de la couche supérieure (1) est effectué en continu.

Selon une autre configuration, dans une étape suivante (Etp11), un collage des bandes de couches fonctionnelles (3) sur la surface intérieure (102) de la bande de la couche inférieure (2) est effectué en continu.

Dans une étape suivante (Etp12), les bandes de couches fonctionnelles (3), le compensateur (4), les bandes de la couche supérieure (1) et la bande de la couche inférieure (2) subissent en continu une mise en pression après collage.

Dans une étape suivante (Etp13), les cartes RFID (0) sont découpées en continu.

Selon une configuration, les bandes assemblées aux étapes précédentes sont découpées longitudinalement en continu afin d'obtenir une pluralité de bandes de dimension au moins égale à la longueur ou la largeur d'une carte RFID (0) et dont le nombre de bandes est égal au nombre de bobines de couches fonctionnelles (3). Chaque bande obtenue est ensuite enroulée sous forme de bobineaux.

Selon une autre configuration, les bandes assemblées aux étapes précédentes sont découpées longitudinalement et transversalement en continu afin d'obtenir une pluralité de bandes de dimension au moins égale à la largeur d'une carte RFID (0) et dont le nombre de bandes est égal au nombre de bobines de couches fonctionnelles (3). Chaque bande subit une série de lignes de perforations pour plier et séparer les cartes RFID (0) facilement. La distance entre chaque ligne de perforations est égale au moins à la largeur ou la longueur de la carte RFID (0). Les cartes RFID sont alors présentées sous forme de paravents.

Selon une autre configuration, les bandes assemblées aux étapes précédentes sont découpées en cartes RFID (0) individuelles.

Dans une étape suivante (Etp14), le bon fonctionnement de chaque système de composant électronique (301) connecté à une antenne (302), de chaque carte RFID, est contrôlé en continu grâce à une antenne de lecture RFID.

Dans une étape suivante non représentée, chaque composant électronique associé à une carte subit une personnalisation. Quelle que soit la présentation du produit en bobineaux, en paravents ou en cartes individuelles, lors de la personnalisation, suivant les besoins, une lecture, un codage et un numérotage du composant électronique (301) permettant ensuite son impression sont possibles, ainsi que la création d'un fichier log ou tout autre type de fichier selon la demande.

Dans une étape suivante non représentée, les bobineaux, les paravents et les cartes individuelles sont conditionnés suivant les besoins ou la demande d'un client.

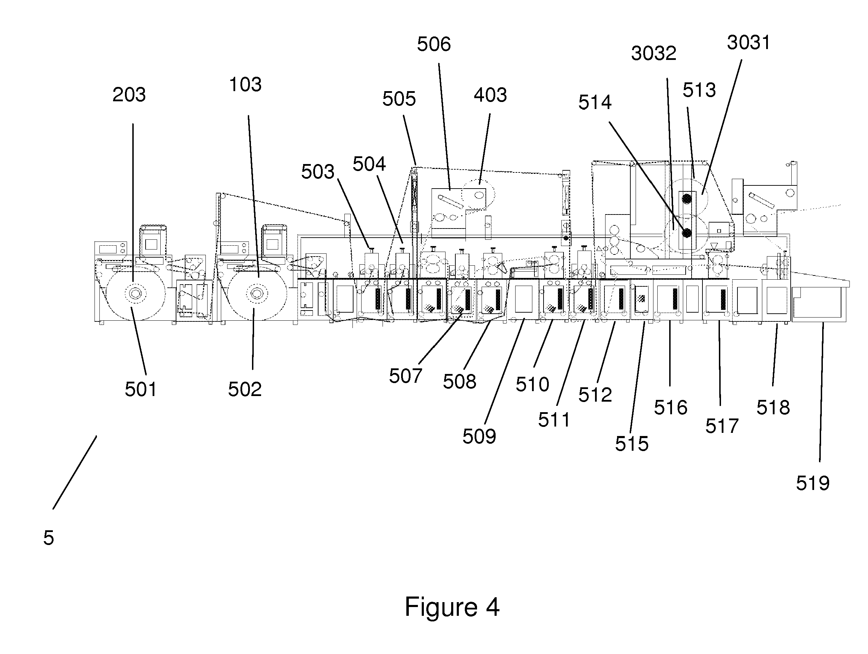

En référence à la figure 4, la machine de production (5) selon le procédé de fabrication de la carte RFID (0) comporte en ligne une succession de postes dont au moins :
- un poste (501) d'alimentation par bobine (203) de la couche inférieure (2) éventuellement pré-imprimée,
- un poste (502) d'alimentation par bobine (103) de la couche supérieure (1),
- au moins un poste (504) d'impression sur la face extérieure de la couche supérieure (1) si besoin,

Préférentiellement, la machine (5) de production comporte en outre :
- un poste (506) d'alimentation par bobine (403) du compensateur (4),
- un poste (507) d'impression sur le compensateur (4) de l'évidement (401) pour le composant électronique (301) et du positionnement de la couche fonctionnelle (3),
- un poste (508) d'évidement du compensateur (4). Préférentiellement, la machine (5) de production comporte en outre :
- un poste (513) comportant au moins un module d'alimentation par bobine (3031, 3032) de bandes de couches fonctionnelles (3).

Préférentiellement, la machine (5) de production comporte en outre :
- un poste (503) de stabilisation de la couche supérieure (1) si besoin,
- un poste (509) de dépose de colle (7) sur la face intérieure (102) de la couche inférieure (2),
- un poste (510) de laminage de la couche inférieure (2) et du compensateur (4),
- un poste (511) de stabilisation en tension de la couche inférieure (2) si besoin,
- un poste (512) de dépose de colle (7) sur le compensateur (4),
- un poste (515) de laminage de l'ensemble compensateur (4) et couche supérieure (1) avec la couche fonctionnelle (3),
- un poste (516) de dépose de colle (7) sur la face intérieure de la couche supérieure (1),
- un poste (517) de laminage de l'ensemble compensateur (4), couche supérieure (1) et couche fonctionnelle (3) sur la couche inférieure (2),
- un poste (518) de découpage des cartes RFID (0),
- un poste (519) de contrôle des cartes RFID (0).

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Carte RFID (0) composée d'au moins :
- une couche fonctionnelle (3) comprenant au moins :
- un composant électronique (301),
- une antenne (302) connectée au composant électronique (301) ;
- une couche supérieure (1) ;
- une couche inférieure (2) ;
**caractérisée en ce que** la carte (0) comprend, en outre, un compensateur (4) entre la couche fonctionnelle (3) et la couche supérieure (1) ou la couche inférieure (2), le compensateur (4) étant évidé à l'emplacement du composant électronique (301) et d'épaisseur sensiblement égale à l'épaisseur du composant électronique (301) sur la couche fonctionnelle (3) ;
et **en ce que** les couches sont assemblées entre elles par collage.

2. Carte RFID (0) selon la revendication 1 **caractérisée en ce que** le compensateur a une épaisseur inférieure à 400 µm.

3. Carte RFID (0) selon la revendication 1 **caractérisée en ce que** la couche supérieure (1) est en matière synthétique souple ou en papier.

4. Carte RFID (0) selon la revendication 1 **caractérisée en ce que** la couche supérieure (1) ou la couche inférieure (2) comporte une surface (101, 202) apte à être imprimée à l'aide d'une imprimante à jet d'encre, une imprimante laser, une imprimante thermique, par transfert thermique, par sublimation ou par impression thermique réinscriptible.

5. Carte RFID (0) selon la revendication 1 **caractérisée en ce que** la couche inférieure (2) est en matière synthétique souple ou en papier.

6. Carte RFID (0) selon la revendication 1 **caractérisée en ce que** la couche inférieure (2) ou la couche supérieure (1) est apte à être imprimée avant l'assemblage par collage.

7. Carte RFID (0) selon la revendication 1 **caractérisée en ce que** la couche fonctionnelle (3) est en matière synthétique souple ou en papier sur lequel est gravée ou imprimée l'antenne (302) connectée au composant électronique (301).

8. Carte RFID (0) selon la revendication 1 **caractérisée en ce que** le compensateur (4) est en matière synthétique souple ou en papier.

9. Carte RFID (0) selon les revendications 1 à 8 **caractérisée en ce que** la couche supérieure, la couche inférieure, la couche fonctionnelle et le compensateur sont en matière biodégradable.

10. Procédé de fabrication de la carte RFID (0) selon les revendications 1 à 9 **caractérisé en ce que** la couche supérieure (1), la couche inférieure (2) et le compensateur (4) sont alimentés en continu par des bobines (103, 203, 403) fournissant des bandes de largeur au moins égale à une des dimensions de la carte RFID (0),
**en ce que** la couche fonctionnelle (3) est alimentée en continu par au moins une bobine (3031, 3032) fournissant au moins une bande en parallèle
et **en ce qu'**il comporte au moins les étapes suivantes :
- une étape (Etp1) d'impression en continu de la surface extérieure de la bande de la couche inférieure (2) ;
- une étape (Etp4) d'évidement en continu de la bande du compensateur (4) ;
- une étape (Etp5) de collage en continu de la bande du compensateur (4) sur la face intérieure (201 ou 102) de la bande de la couche inférieure (2) ou de la bande de la couche supérieure (1) ;
- une étape (Etp9) de mise en place en continu des composants électroniques en coïncidence avec les évidements (401) de la bande du compensateur (4) ;
- une étape (Etp10) de mise en pression en continu des bandes de couches fonctionnelles (3) avec la bande du compensateur (4).
- une étape (Etp11) de collage en continu de la ou des bandes de la couche fonctionnelle (3) sur la face intérieure (102 ou 201) de la bande de la couche supérieure (1) ou de la bande de la couche inférieure (2) ;
- une étape (Etp13) de découpage en continu.

11. Procédé de fabrication selon la revendication 10 **caractérisé en ce que** l'étape (Etp1) d'impression en continu de la surface extérieure (202) de la bande de la couche inférieure (2) est suivie d'une étape (Etp3) d'impression en continu de la surface extérieure (101) de la bande de la couche supérieure (1).

12. Procédé de fabrication selon la revendication 10 **caractérisé en ce que** l'étape (Etp1) d'impression en continu de la surface extérieure (202) de la bande de la couche inférieure (2) est précédée d'une étape (Etp3) d'impression en continu de la surface extérieure (101) de la bande de la couche supérieure (1).

13. Procédé de fabrication selon la revendication 14 **caractérisé en ce que** l'étape de découpage (Etp13) en continu consiste en une découpe longitudinale des bandes assemblées puis un enroulement sous forme de bobineaux, ou une découpe longitudinale et transversale des bandes assemblées, puis un pliage sous forme de paravents, ou une découpe des bandes assemblées en cartes RFID (0) individuelles.

14. Procédé de fabrication selon la revendication 10 **caractérisé en ce que** l'étape de découpage (Etp13) en continu des cartes RFID (0) est suivie d'une étape de contrôle (Etp14) en ligne à l'aide d'une antenne de lecture.

15. Procédé de fabrication selon la revendication 14 **caractérisé en ce que** l'étape de contrôle (Etp14) est suivie d'une étape de personnalisation en continu.

16. Machine (5) de production selon le procédé de fabrication selon les revendications 10 à 15 de la carte RFID (0) selon les revendications 1 à 9 **caractérisée en ce qu'**elle comporte en ligne une succession de postes dont au moins :
- un poste (501) d'alimentation par bobine (203) de la couche inférieure (2),
- un poste (502) d'alimentation par bobine (103) de la couche supérieure (1),
- au moins un poste (504) d'impression sur la face extérieure (101 ou 202) de la couche supérieure (1) ou de la couche inférieure (2) si besoin,
- un poste (509) de dépose de colle (7) sur la surface intérieure (102) de la couche inférieure (2),
- un poste (512) de dépose de colle (7) sur le compensateur (4),
- un poste (516) de dépose de colle (7) sur la surface intérieure de la couche supérieure (1).

17. Machine (5) de production selon la revendication 16 **caractérisée en ce qu'**elle comporte en outre :
- un poste (506) d'alimentation par bobine (403) du compensateur (4),
- un poste (508) d'évidemment du compensateur (4).

18. Machine (5) de production selon la revendication 16 **caractérisée en ce qu'**elle comporte en outre :
- un poste (513) d'alimentation par bobine (3031) d'une bande de la couche fonctionnelle (3),
- un poste (514) d'alimentation par bobine (3032) d'une autre bande de la couche fonctionnelle (3).
